# EUROPÄISCHE PATENTSCHRIFT

(11) **EP 1 284 881 B1**
(45) Veröffentlichungstag und Bekanntmachung des Hinweises auf die Patenterteilung: **13.10.2004**
(21) Anmeldenummer: 01937992.4
(22) Anmeldetag: 08.05.2001
(51) Int. Cl.: B60K 26/02, G05G 1/14

(54) **FAHRPEDALMODUL**
ACCELERATOR PEDAL MODULE
MODULE PEDALE D'ACCELERATEUR

(30) Priorität: 11.05.2000 DE 10022960
(43) Veröffentlichungstag der Anmeldung: 26.02.2003
(73) Patentinhaber: ROBERT BOSCH GMBH, 70442 Stuttgart (DE); Bayerische Motoren Werke Aktiengesellschaft, 80788 München (DE)
(72) Erfinder: MEYER, Dirk, 71364 Winnenden (DE); Kirmse, Stefan, 82541 Münsing (DE); Unterforsthuber, Jakob, 82216 Maisach (DE)
(86) Internationale Anmeldenummer: PCT/DE2001/001722
(87) Internationale Veröffentlichungsnummer: WO 2001/085485

(56) Entgegenhaltungen:
- DE-A- 3 938 474
- DE-A- 4 243 373
- DE-A- 19 701 184
- US-A- 3 142 199
- US-A- 3 858 457
- PATENT ABSTRACTS OF JAPAN vol. 1996, no. 6, 28. Juni 1996 (1996-06-28) -& JP 08 042612 A (TOYOTA TEKKO), 16. Februar 1996 (1996-02-16)

## Beschreibung

### Stand der Technik

Die Erfindung geht von einem Kraftfahrzeug mit einem Fahrpedalmodul nach dem Oberbegriff des Anspruchs 1 aus, wie in der DE 3 938 474 A offenbart.

Die Patentschrift US 4,528,590 zeigt ein an einem Fahrerraumboden eines Kraftfahrzeugs anbringbares Fahrpedalmodul. Bei diesem Fahrpedalmodul kann der Drehpunkt der Fußauflagefläche des Pedalhebels so festgelegt werden, dass bei einer Betätigung des Pedalhebels ein angenehmes Gefühl für den Fahrerfuß entsteht. Allerdings wollen viele Hersteller von Kraftfahrzeugen das Fahrpedalmodul nicht im Bereich des Fahrerraumbodens anbringen, sondern sie wollen das Fahrpedalmodul viel lieber an einer aufrechten Wand des Fahrerraums oder an im Bereich unterhalb der Lenksäule vorhandenen Trägern befestigen. Dies hat verschiedene Gründe, insbesondere wegen einfacherem und schnellerem Anbauen des Fahrpedalmoduls, wegen eventueller Schwingungen im Bereich des Fahrerraumbodens und weil man der Meinung ist, dass bei einem Unfall die Gefahr für den Fahrerfuß geringer ist, wenn das Fahrpedalmodul nicht am Fahrerraumboden befestigt ist.

Die japanische Patentoffenlegungsschrift JP 60-99729 (Anmelde-Nr. 58-207192) zeigt ein an einer aufrechten Wand eines Fahrerraumes anbringbares Fahrpedalmodul. Allerdings besteht bei diesem Fahrpedalmodul der Nachteil, dass sich der Drehpunkt des Pedalhebels mit der Fußauflagefläche weit oberhalb und damit weit weg vom unteren Ende der Ferse des Fahrerfußes befindet. Diese Tatsache wird von manchen Fahrern als unangenehm und störend bei der Betätigung des Pedalhebels empfunden.

Die europäische Offenlegungsschrift EP 0 575 197 A1 sowie die amerikanischen Patentschriften US 5,321,980 und US 5,133,321 zeigen Fahrpedalmodule, bei denen sich der Drehpunkt des Pedalhebels mit der Fußauflagefläche im Bereich des unteren Endes der Ferse des Fahrerfußes befindet. Allerdings ist der Aufwand zum Herstellen dieser Fahrpedalmodule sehr aufwendig und die Stelle, an der diese Fahrpedalmodule angebaut werden müssen, wird von vielen Kraftfahrzeugherstellern nicht akzeptiert.

Die Patentschrift US 5,063,811 und die Veröffentlichung der internationalen Patentanmeldung WO 89/07706 zeigen Pedalanordnungen, bei denen sich der Drehpunkt des Pedalhebels mit der Fußauflagefläche im Bereich des Fahrerraumbodens befindet und die Sensoren zum Ermitteln der Stellung des Pedalhebels befinden sich an einer aufrechten Wand des Fahrerraums oberhalb des Fahrerraumbodens. Bei diesen Pedalanordnungen entsteht zwar für den Fahrerfuß beim Betätigen des Pedalhebels ein angenehmes Gefühl aber diese Pedalanordnungen bauen insgesamt sehr groß und der Aufwand zum Herstellen und zum Einbauen dieser Pedalanordnungen in Kraftfahrzeuge ist sehr hoch.

Die deutsche Offenlegungsschrift DE 195 00 569 A 1 zeigt ein an einer aufrechten Wand des Fahrerraums anbringbares Fahrpedalmodul mit einer weit nach unten reichenden Gliederfeder. Mit Hilfe der Gliederfeder soll ein Bewegungsablauf erreicht werden der in etwa dem eines am Fahrerraumboden angebrachten Pedals entspricht, was jedoch nicht vollkommen gelingt. Zusätzlich baut diese Anordnung ziemlich groß; zudem ist diese Anordnung bruchgefährdet und der Freiraum zwischen der Unterkante der Gliederfeder und dem Fahrerraumboden ist verkleinert.

Die deutsche Offenlegungsschrift DE 197 01 184 A1 zeigt ein an einer aufrechten Wand des Fahrerraums anbringbares Fahrpedalmodul. Beim Betätigen des Pedalhebels mit der Fußauflagefläche bewegt sich der Pedalhebel in etwa parallel zur aufrechten Wand des Fahrerraums nach unten. Der Bewegungsablauf des Pedalhebels dieses Fahrpedalmoduls mag zwar bei manchen Arbeitsmaschinen, bei denen eine erhöhte Sitzposition üblich ist, wie z. B. bei Gabelstaplern, nicht als besonders störend empfunden werden. Allerdings bei Kraftfahrzeugen, bei denen eine eher flachere Sitzposition üblich ist, wie beispielsweise bei Personenkraftwagen, wäre ein derartiger Bewegungsablauf des Pedalhebels nicht akzeptabel.

### Vorteile der Erfindung

Das erfindungsgemäß ausgeführte Kraftfahrzeug mit den kennzeichnenden Merkmalen des Anspruchs 1 hat demgegenüber den Vorteil, daß das Fahrpedalmodul trotz seiner Anbringung oberhalb des Fahrerraumbodens für den den Pedalhebel betätigenden Fahrerfuß ein ähnlich angenehmes Gefühl vermittelt, wie eine Pedalanordnung mit einem Pedalhebel, bei dem sich der Drehpunkt körperlich unmittelbar im Bereich des Fahrerraumbodens befindet. Das Fahrpedalmodul bietet bei der Betätigung einen Komfort, der mindestens dem eines am Fahrerraumboden angebrachten Pedalhebels entspricht.

Ein weiterer Vorteil dieses Fahrpedalmoduls ist, dass das Fahrpedalmodul insgesamt leicht herstellbar ist, eine relativ geringe Baugröße aufweist, kompakt vormontiert werden kann und dass es ohne weitere Nacharbeit und Justierungen an einer aufrechten Wand des Fahrerraums oder an einem sonstigen Träger oberhalb des Fahrerraumbodens befestigt werden kann. Des weiteren von Vorteil ist die gute Schwingfestigkeit des Fahrpedalmoduls, die geringe Anfälligkeit gegen Bruch und gegen Verschleiß. Ein weiterer Vorteil ist, daß zwischen der Unterkante des Fahrpedalmoduls und dem Fahrerraumboden ein ziemlich großer und relativ konstanter Zwischenraum freigelassen werden kann.

Das erfindungsgemäße Verfahren zum konstruktiven Festlegen der Drehachse des zweiten Hebeldrehgelenks nach Anspruch 6 hat den Vorteil, dass auf sehr einfache Weise und sehr präzise die Drehachse des zweiten Hebeldrehgelenks festgelegt werden kann.

Durch die in den Unteransprüchen aufgeführten Maßnahmen sind vorteilhafte Weiterbildungen und Verbesserungen des im Hauptanspruch angegebenen Fahrpedalmoduls möglich.

Insbesondere erhält man zusätzlich den Vorteil, dass der Schwenkpunkt des Pedalhebels mit der Fußauflagefläche noch wesentlich präziser festgelegt werden kann und dass der Schwenkpunkt sich genau dort befindet, wo es gewünscht wird, um ein besonders angenehmes Gefühl für den den Pedalhebel betätigenden Fahrerfuß zu erreichen.

### Zeichnung

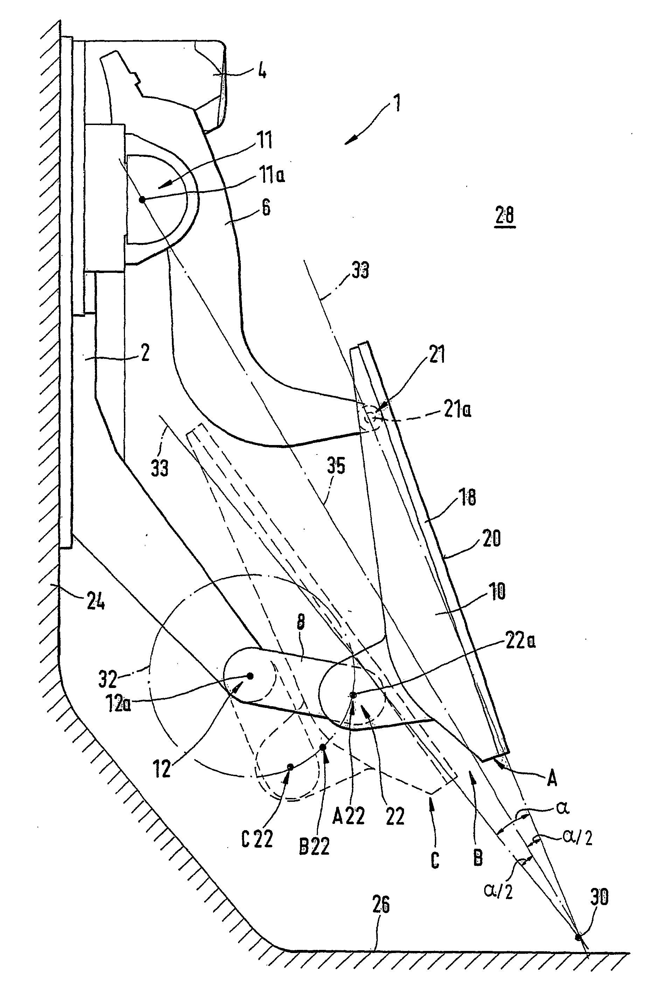

Ein bevorzugt ausgewähltes, besonders vorteilhaftes Ausführungsbeispiel der Erfindung ist in der Zeichnung vereinfacht dargestellt und in der nachfolgenden Beschreibung näher erläutert.

### Beschreibung des Ausführungsbeispiel

Das Fahrpedalmodul 1 kann zur Steuerung verschiedener Antriebsmaschinen verwendet werden. Die Antriebsmaschine ist beispielsweise ein Ottomotor, dessen Drosselklappe mit einem Stellmotor verstellt wird..In diesem Fall dient das Fahrpedalmodul 1 zum Abgeben von elektrischen Signalen, die dem die Drosselklappe verstellenden Stellmotor zugeführt werden. Die Antriebsmaschine kann aber auch beispielsweise ein Dieselmotor oder ein Elektromotor sein, wobei auch in diesen Fällen vom Fahrpedalmodul 1 elektrische Signale ausgehen, welche, entsprechend umgeformt, die Leistung der Antriebsmaschine steuern.

Das Fahrpedalmodul 1 kann aber auch dazu verwendet werden, um damit eine Bremse oder eine Kupplung des Kraftfahrzeugs zu betätigen.

Das Fahrpedalmodul 1 ist direkt im Aktionsbereich des Kraftfahrzeugführers an einem Fahrzeugteil 24 des Kraftfahrzeugs befestigt. In den Fällen, in denen das Fahrpedalmodul 1 zum Steuern der Leistung der Antribsmaschine dient, wird der Pedalhebel 10 des Fahrpedalmoduls 1 häufig auch als Gaspedal bezeichnet.

Die Zeichnung zeigt ein bevorzugt ausgewähltes, besonders vorteilhaftes Ausführungsbeispiel. Dargestellt ist eine Seitenansicht des Fahrpedalmoduls 1.

Das Fahrpedalmodul 1 umfaßt eine Haltestruktur 2, einen Sensor 4, einen ersten Hebel 6, einen zweiten Hebel 8 und einen Pedalhebel 10. Wegen der räumlichen Anordnung kann der erste Hebel 6 auch als oberer Hebel und der zweite Hebel 8 auch als unterer Hebel bezeichnet werden. Die mechanische Verbindung zwischen dem Sensor 4 und dem ersten Hebel 6 kann in der Weise geschehen, wie es in der internationalen Patentveröffentlichung WO 97/12781 und in der Patentschrift US 5,934,152 ausführlich beschrieben und dargestellt ist.

Der erste Hebel 6 ist an der Haltestruktur 2 über ein erstes Hebeldrehgelenk 11 drehbar gelagert. Der zweite Hebel 8 ist an der Haltestruktur 2 über ein zweites Hebeldrehgelenk 12 drehbar gelagert. Der Pedalhebel 10 ist an dem vom ersten Hebeldrehgelenk 11 abgewandten Ende des ersten Hebels 6 über ein erstes Pedaldrehgelenk 21 am ersten Hebel 6 drehbar gelagert. Daneben ist der Pedalhebel 10 an dem vom zweiten Hebeldrehgelenk 12 abgewandten Ende des zweiten Hebels 8 über ein zweites Pedaldrehgelenk 22 an dem zweiten Hebel 8 drehbar gelagert.

An der der Haltestruktur 2 abgewandten Seite des Pedalhebels 10 ist eine Pedalplatte 18 vorgesehen. Die Pedalplatte 18 hat eine in Richtung des Fahrerraums 28 weisende Fußauflagefläche 20.

Der Sensor 4 liefert, je nach Stellung des ersten Hebels 6, elektrische Signale an eine nicht dargestellte Steuereinrichtung, mit der die Leistung der nicht dargestellten Antriebsmaschine beeinflußt werden kann. Weil die Bewegung des ersten Hebels 6 an die Bewegung des Pedalhebels 10 gekoppelt ist, kann über ein Niederdrücken der Fußauflagefläche 20 der erste Hebel 6 verstellt werden, und dadurch kann über den Sensor 4 der Wunsch des Fahrers an die Antriebsmaschine übermittelt werden.

Das Fahrpedalmoduls 1 kann auch so benutzt werden, daß mit Hilfe des Sensors 4 eine nicht dargestellte Bremseinrichtung oder eine nicht dargestellte Kupplung des Kraftfahrzeugs gesteuert wird. Oder aber, das Fahrpedalmodul 1 kann so abgewandelt werden, dass, je nach Stellung des ersten Hebels 6, hydraulische Signale oder mechanische Signale beispielsweise zum Betätigen der Bremse oder der Kupplung des Kraftfahrzeugs erzeugt werden.

Die Haltestruktur 2 des Fahrpedalmoduls 1 ist über nicht dargestellte Befestigungsschrauben an einem Fahrzeugteil 24 befestigt. Ein Fahrerraumboden 26 begrenzt den Fahrerraum 28 des Kraftfahrzeug nach unten hin. Das Fahrzeugteil 24 ist beispielsweise eine aufrechte Wand und begrenzt den Fahrerraum 28 nach vorne hin. Das Fahrzeugteil 24 ist beispielsweise eine Trennwand zwischen dem Fahrerraum 28 und einem sich vor dem Fahrerraum 28 befindenden Raum, beispielsweise ein Motorraum. Das Fahrzeugteil 24 kann beispielsweise aber auch ein unterhalb der Lenksäule vorgesehener Querträger oder ein Längsträger sein. Das Fahrzeugteil 24, insbesondere die Trennwand, kann senkrecht stehen oder geneigt sein. Wie das dargestellte Ausführungsbeispiel zeigt, kann das nach oben ragende Fahrzeugteil 24 einstückig in den eher horizontalen Fahrerraumboden 26 übergehen. Wie man der Zeichnung ebenfalls leicht entnehmen kann, ist die Haltestruktur 2 des Fahrpedalmoduls 1 mit deutlichem Abstand oberhalb des Fahrerraumbodens 26 an dem Fahrzeugteil 24 befestigt. Bei dem dargestellten Ausführungsbeispiel gibt es keinen unmittelbaren Kontakt zwischen dem Fahrpedalmodul 1 und dem Fahrerraumboden 26 des Kraftfahrzeugs.

Das erste Hebeldrehgelenk 11 hat eine Drehachse 11a, um die der erste Hebel 6 um einen gewissen Winkel drehbar ist. Die senkrecht zur Bildebene der Zeichnung verlaufende Drehachse 11a ist in der Zeichnung als Punkt symbolhaft dargestellt. Das zweite Hebeldrehgelenk 12 hat eine Drehachse 12a, um die der zweite Hebel 8 um einen bestimmten Winkel drehbar ist. Die senkrecht zur Bildebene verlaufende Drehachse 12a des zweiten Hebeldrehgelenks 12 ist symbolhaft als Punkt dargestellt. Das erste Pedaldrehgelenk 21 hat eine senkrecht zur Bildebene verlaufende Drehachse, um die der erste Hebel 6 und der Pedalhebel 10 relativ zueinander um einen begrenzten Winkel drehbar sind. Die in der Zeichnung als Punkt symbolhaft dargestellte Drehachse des ersten Pedaldrehgelenks 21 wird nachfolgend als Drehpunkt 21a des ersten Pedaldrehgelenks 21 bezeichnet. Das zweite Pedaldrehgelenk 22 hat eine Drehachse, um die der zweite Hebel 8 und der Pedalhebel 10 relativ zueinander um einen begrenzten Winkel verdrehbar sind. Die in der Zeichnung als Punkt symbolhaft dargestellte Drehachse des zweiten Pedaldrehgelenks 22 wird nachfolgend als Drehpunkt 22a des zweiten Pedaldrehgelenks 22 bezeichnet.

Durch Versuche kann ein Schwenkpunkt 30 ermittelt werden. Der Schwenkpunkt 30 ist der Punkt, der die Stelle bezeichnet, die so ermittelt ist, dass wenn sich der Pedalhebel 10 mit der an dem Pedalhebel 10 vorgesehenen Fußauflagefläche 20 um diesen Punkt dreht, sich für den den Pedalhebel 10 betätigenden Fahrerfuß das angenehmste, ermüdungsfreieste und unverkrampfteste Gefühl ergibt. Die beste Stelle für den Schwenkpunkt 30 befindet sich erfahrungsgemäß im Bereich des Fahrerraumbodens 26, kann aber auch etwas weg vom Fahrerraumboden 26 vorgesehen sein.

Je nach Sitzposition des den Pedalhebel 10 betätigenden Fahrers befindet sich der Schwenkpunkt 30 idealerweise direkt an der Oberfläche des Fahrerraumbodens 26, oder der Schwenkpunkt 30 befindet sich etwas oberhalb des Fahrerraumbodens 26, oder der Schwenkpunkt 30 befindet sich geringfügig unterhalb der Oberfläche des Fahrerraumbodens 26. Die genaue Position des Schwenkpunkts 30 ist von der Sitzposition, die das Kraftfahrzeug bietet, und von den das Kraftfahrzeug benutzenden Fahrern abhängig und kann über Versuche als Mittelwert festgelegt werden. Das vorgeschlagene Fahrpedalmodul 1 bietet die vorteilhafte Möglichkeit, dass der Schwenkpunkt 30 genau dorthin gelegt werden kann, wo er vom Benutzer des Fahrpedalmoduls 1 gewünscht wird.

Weil sich der ideale Schwenkpunkt 30 im Bereich des Fahrerraumbodens 26 beziehungsweise in der Nähe des Fahrerraumbodens 26 befindet und weil das Fahrpedalmodul 1, insbesondere auch der Pedalhebel 10, einen Mindestabstand zum Fahrerraumboden 26 haben soll, wobei dieser Mindestabstand deutlich größer ist als der Abstand des Schwenkpunkts 30 vom Fahrerraumboden 26, ergibt sich, dass sich der Schwenkpunkt 30 außerhalb des Pedalhebels 10 befindet.

Obwohl sich der Schwenkpunkt 30 mit deutlichem Abstand außerhalb des Pedalhebels 10 des Fahrpedalmoduls 1 befindet, wird bei dem hier vorgeschlagenen Fahrpedalmodul 1 erreicht, dass bei einer Betätigung der Pedalplatte 18 sich der Pedalhebel 10 zusammen mit der Pedalplatte 18 um den Schwenkpunkt 30 bewegt.

Um dies zu erreichen, muß sich die Drehachse 12a des zweiten Hebeldrehgelenks 12 an einer ganz bestimmten Stelle befinden. Nur wenn sich die Drehachse 12a an dieser Stelle befindet, wird erreicht, dass bei einer Betätigung des Pedalhebels 10 sich dieser um den Schwenkpunkt 30 bewegt. Die nachfolgenden Erläuterungen zeigen einen einfachen Weg zum Ermitteln der erforderlichen Position der Drehachse 12a des zweiten Hebeldrehgelenks 12. Oder mit anderen Worten, mit dem nachfolgend beschriebenen Verfahren kann auf einfache Weise die Stelle ermittelt werden, an der sich konstruktionsbedingt die Drehachse 12a des zweiten Hebeldrehgelenks 12 befinden muß:

Zunächst wird die Haltestruktur 2 mit dem ersten Hebeldrehgelenk 11, mit dem am ersten Hebeldrehgelenk 11 gelagerten ersten Hebel 6 und mit dem über das erste Pedaldrehgelenk 21 an dem Hebel 6 gelagerten Pedalhebel 10 an dem aufragenden Fahrzeugteil 24 befestigt. Dies kann beispielsweise in einem realen Versuchsfahrzeug oder in einem dafür vorgesehenen Versuchsstand oder am Zeichenbrett oder bei einer computerunterstützten Konstruktion zeichnerisch im Computer geschehen. Dabei ist die Position des zweiten Hebeldrehgelenks 12 mit der Drehachse 12a noch nicht festgelegt. Auch der zweite Hebel 8 ist noch nicht vorhanden. Dabei ist aber bereits der Drehpunkt 22a des zweiten Pedaldrehgelenks 22 an der richtigen Stelle am Pedalhebel 10 vorgesehen.

Nach diesen Vorarbeiten stellt man den Pedalhebel 10 in eine erste Stellung A, in der der Pedalhebel 10 so ausgerichtet ist und so geneigt ist, wie er im Fahrzeug idealerweise stehen soll. Besonders günstig ist es, wenn man für die erste Stellung A die Stellung nimmt, in der der Pedalhebel 10 in der unbetätigten Stellung stehen soll. Die unbetätigte Stellung entspricht üblicherweise der Leerlaufstellung der Antriebsmaschine. In dieser Stellung A des Pedalhebels 10 wird die Position des Drehpunkts 22a des zweiten Pedaldrehgelenk 22 markiert. Um den Vorgang leichter erklären zu können, wollen wir diese Position des Drehpunkts 22a als erste Position A22 bezeichnen. Anschließend wird durch Schwenken des ersten Hebels 6 um die Drehachse 11a der erste Hebel 6 so weit gedreht, bis er in einer in etwa mittleren Stellung steht. In dieser Stellung des ersten Hebels 6 wird dann der Pedalhebel 10 so weit um den Drehpunkt 21a geschwenkt, bis der Pedalhebel 10 in einer Stellung steht, in der er eine Schwenkbewegung um den Schwenkpunkt 30 ausgeführt hat. Diese neue Stellung des Pedalhebels 10 wird hier als zweite Stellung B bezeichnet. Die Ausrichtung des Pedalhebels 10 ist dabei sehr einfach möglich, denn der zweite Hebel 8 ist bei dieser Einstellung noch nicht vorhanden. In dieser Stellung B des Pedalhebels 10 wird dann eine zweite Position B22 des Drehpunkts 22a markiert. Anschließend wird dann der erste Hebel 6 um die Drehachse 11a weiter geschwenkt, bis der Hebel 6 in einer dritten Position steht. Es wird vorgeschlagen, als dritte Position diejenige zu wählen, in der der erste Hebel 6 bei vollständigem Niederdrücken steht, was üblicherweise der Vollaststellung für maximale Leistung der Antriebsmaschine entspricht. In dieser Stellung des ersten Hebels 6 wird dann der Pedalhebel 10 so weit um den Drehpunkt 21a gedreht, bis der Pedalhebel 10 so ausgerichtet ist, dass die Stellung des Pedalhebels 10 wiederum einem Schwenken um den Schwenkpunkt 30 entspricht. In dieser dritten Stellung C des Pedalhebels 10 wird eine dritte Position C22 des Drehpunkts 22a des zweiten Pedaldrehgelenks 22 markiert.

Nach dieser Vorarbeit hat man drei markierte Positionen A22, B22, C22 für den Drehpunkt 22a des zweiten Pedaldrehgelenks 22. Anschließend ermittelt man einen Mittelpunkt eines Kreises 32, der durch diese drei markierten Punkte der Positionen A22, B22, C22 verläuft. Zwecks schnellerer Orientierung ist der Kreis 32 in der Zeichnung mit strichpunktierter Linie angedeutet. Weil durch drei Punkte der Kreis 32 exakt definiert ist und weil mit diesen drei Punkten A22, B22, C22 der Mittelpunkt des durch die drei Punkte A22, B22, C22 verlaufenden Kreises 32 exakt und auf einfache Weise ermittelt werden kann, ist es leicht möglich, die Stelle genau zu ermitteln, an der sich die Drehachse 12a des zweiten Hebeldrehgelenks 12 befinden muß, um zu erreichen, dass bei einer Betätigung des Pedalhebels 10 der Pedalhebel 10 eine Bewegung ausführt, die einem Schwenken um den Schwenkpunkt 30 entspricht. Der Mittelpunkt des Kreises 32 ergibt die ideale Stelle für die Drehachse 12a des zweiten Hebeldrehgelenks 12. Es sei noch kurz erwähnt, daß die Methode, mit der der Mittelpunkt eines durch drei vorgegebene Punkte gehenden Kreises ermittelt wird, üblicherweise an allgemeinbildenden Schulen der Mittelstufe gelehrt wird und auch in vielen bei Mathematikern und Ingenieuren gebräuchlichen Grundlagen-Handbüchern nachlesbar ist. Es gibt auch viele Computerprogramme, die auf Tastendruck sofort den Mittelpunkt des durch drei Punkte gehenden Kreises angeben.

Mit dem in den vorausgehenden Abschnitten beschriebenen Verfahren kann die erforderliche Position für die Drehachse 12a des zweiten Hebeldrehgelenks 12 auf einfache Weise und exakt bestimmt und festgelegt werden. Mit üblichen Werkzeugmaschinen läßt sich erreichen, dass bei den Fahrpedalmodulen, die die auf diese Weise ermittelten Abmessungen aufweisen, bei einem Niederdrücken der Pedalplatte 18 der Pedalhebel 10 mit der Fußauflagefläche 20 um den Schwenkpunkt 30 schwenkt.

Es sei noch erwähnt, daß, je nach Anforderung durch die das Fahrpedalmodul 1 benutzenden Kunden, die tatsächliche Stelle der Drehachse 12a des Hebeldrehgelenks 12 auch etwas von der idealen Position abweichen kann, denn von manchen Kunden wird auch ein leichtes Wandern des Schwenkpunktes 30 während einer Betätigung des Pedalhebel 10 akzeptiert.

Erleichtert wird die Ermittlung der drei Positionen A22, B22, C22 des Drehpunkts 22a, wenn man sich eine mit dem Pedalhebel 10 fest verbundene Orientierungsgerade 33 vorstellt, wobei die Orientierungsgerade 33 über den körperlichen Umfang des Pedalhebels 10 hinausgeht. Zwecks besserer Orientierung ist die Orientierungsgerade 33 in der Zeichnung mit strichpunktierter Linie dargestellt. Zur Ermittlung der drei Positionen A22, B22, C22 kann man die Orientierungsgerade 33 entweder körperlich beispielsweise in Form eines Stabes anbringen oder man kann sich die Orientierungsgerade 33 gedanklich vorstellen oder bei computerunterstützter Konstruktion als Hilfslinie eingeben. Während der Ermittlung der drei Stellungen A, B und C des Pedalhebels 10 ist dann nur noch darauf zu achten, dass die Orientierungsgerade 33 in allen drei Stellungen A, B, C jeweils durch den Schwenkpunkt 30 verläuft. Besonders zweckmäßig ist es und ein besonders genaues Ergebnis ergibt sich, wenn die Orientierungsgerade 33 so gelegt wird, dass sie auch den Drehpunkt 21a des ersten Pedaldrehgelenks 21 schneidet. Darüber hinaus wird noch vorgeschlagen, dafür zu sorgen, dass die Fußauflagefläche 20 am Pedalhebel 10 in etwa parallel zur Orientierungsgeraden 33 verläuft. Je nach Sitzposition des Fahrers kann es jedoch zweckmäßig sein, dass die Fußauflagefläche 20 geringfügig gegenüber der Orientierungsgeraden 33 geneigt ist, wie in der Zeichnung dargestellt.

In der Zeichnung ist der Pedalhebel 10 in seiner unbetätigten Ruhestellung mit ausgezogenen Linien dargestellt. Die Ruheposition entspricht der Stellung A und ist in der Zeichnung mit A markiert. Zusätzlich zeigt die Zeichnung den Pedalhebel 10 mit gestrichelten Linien auch noch in seiner voll betätigten Endstellung, die bereits weiter oben als Stellung C bezeichnet wird. Zwischen den Stellungen A und C gibt es noch die Stellung B des Pedalhebels 10. In der Zeichnung ist der Pedalhebel 10 der besseren Übersichtlichkeit wegen nicht auch noch in der Stellung B gezeichnet, sondern die Stellung B des Pedalhebels 10 ist nur durch einen mit B markierten Pfeil angedeutet.

Die Zeichnung zeigt zwei mal die Orientierungsgerade 33 mit gestrichelten Linien. Einmal ist die Orientierungsgerade 33 dargestellt, wenn sich der Pedalhebel 10 in der unbetätigten Stellung A befindet und einmal ist die Orientierungsgerade 33 dargestellt, wenn sich der Pedalhebel 10 in seiner voll betätigten Stellung C befindet.

Zwischen der zwei mal mit strichpunktierten Linien dargestellten Orientierungsgeraden 33 gibt es einen Winkel alpha (a). Das heißt, dass der Pedalhebel 10 um den Winkel alpha (α) um den Schwenkpunkt 30 geschwenkt.

In der Zeichnung ist auch noch eine mit strichpunktierter Linie dargestellte Verbindungsgerade 35 als Orientierungshilfe symbolhaft dargestellt. Die Verbindungsgerade 35 schneidet die Drehachse 11a des ersten Hebeldrehgelenks 11 und den Schwenkpunkt 30. Wenn der Pedalhebel 10 aus der mit voll ausgezogenen Linien dargestellten Stellung A in die mit gestrichelten Linien dargestellte Stellung C betätigt wird, dann schwenkt der Pedalhebel 10 um den Schwenkpunkt 30, dabei macht der Pedalhebel 10 zunächst eine geringfügige radiale Bewegung in Richtung hin zum Schwenkpunkt 30 und vor Erreichen der Stellung C bewegt sich der Pedalhebel 10 wieder etwas in radialer Richtung weg vom Schwenkpunkt 30. Diese, bezogen auf den Schwenkpunkt in radialer Richtung verlaufende Bewegung des Pedalhebels 10 ist nur sehr geringfügig und wird in der Praxis bei der Betätigung des Pedalhebels 10 vom Fahrerfuß nicht wahrgenommen. Wegen der in radialer Richtung hin zum Schwenkpunkt 30 bzw. weg vom Schwenkpunkt 30 verlaufenden Bewegung des Pedalhebels 10 wird auch der Punkt 30 in der hier vorliegenden Beschreibung als Schwenkpunkt oder Schwenkachse und nicht als Drehpunkt oder Drehachse bezeichnet.

Bezogen auf den Schwenkpunkt 30, wird dann eine besonders kleine, in radialer Richtung verlaufende Bewegung des Pedalhebels 10 erreicht, wenn das Fahrpedalmodul 1 so ausgelegt wird, dass sich die Verbindungsgerade 35 innerhalb des Schwenkwinkels alpha (α) befindet. Die insgesamt kleinste in radialer Richtung verlaufende Bewegung des Pedalhebels 10 erhält man dann, wenn die Verbindungsgerade 35 mit der Winkelhalbierenden des Schwenkwinkels alpha (α) zusammenfällt.

Insgesamt betrachtet, die kleinsten Bauteilabmessungen erhält man dann, wenn man den horizontalen Abstand zwischen der Drehachse 11a des Hebeldrehgelenks 11 und dem unteren Bereich des Pedalhebels 10 drittelt und ungefähr an je einem Drittel des horizontalen Abstandes die Drehachse 12a des Hebeldrehgelenks 12 beziehungsweise den Drehpunkt 22a des Pedaldrehgelenks 22 vorsieht.

## Patentansprüche

1. Kraftfahrzeug mit einem Fahrpedalmodul zum Steuern der Fahrgeschwindigkeit des Kraftfahrzeugs, wobei das Fahrpedalmodul eine Haltestruktur (2), einen ersten Hebel (6), einen zweiten Hebel (8) und einen Pedalhebel (10) aufweist, wobei der erste Hebel (6) an der Haltestruktur (2) über ein erstes Hebeldrehgelenk (11) drehbar gelagert, der zweite Hebel (8) an der Haltestruktur (2) über ein zweites Hebeldrehgelenk (12) drehbar gelagert und der Pedalhebel (10) über ein erstes Pedaldrehgelenk (21) an dem ersten Hebel (6) und über ein zweites Pedaldrehgelenk (22) an dem zweiten Hebel (8) gelagert sind, die Haltestruktur (2) an einem Fahrzeugteil (24) des Kraftfahrzeugs befestigt ist, wobei das Kraftfahrzeug einen Fahrerraum (28) und einen den Fahrerraum (28) nach unten begrenzenden Fahrerraumboden (26) hat und außerhalb des Pedalhebels (10) ein Schwenkpunkt (30) vorgesehen ist, **dadurch gekennzeichnet, daß** eine zumindest denkbare Orientierungsgerade (33) des Pedalhebels (10) in mindestens drei Stellungen des Pedalhebels (10) im wesentlichen durch den Schwenkpunkt (30) geht, und der Schwenkpunkt (30) im Bereich des Fahrerraumbodens (26) vorgesehen ist.

2. Kraftfahrzeug nach Anspruch 1, **dadurch gekennzeichnet, daß** die Haltestruktur (2) oberhalb des Fahrerraumbodens (26) an dem Fahrzeugteil (24) angebracht ist.

3. Kraftfahrzeug nach einem der Ansprüche 1 oder 2, **dadurch gekennzeichnet, daß** der Pedalhebel (10) eine Fußauflagefläche (20) hat und die Orientierungsgerade (33) im wesentlichen parallel zur Fußauflagefläche (20) verläuft.

4. Kraftfahrzeug nach einem der Ansprüche 1 bis 3, **dadurch gekennzeichnet, daß** die Orientierungsgerade (33) durch das erste Pedaldrehgelenk (21) verläuft.

5. Kraftfahrzeug nach einem der Ansprüche 1 bis 4, **dadurch gekennzeichnet, daß** der Pedalhebel (10) über einen Schwenkwinkel (α) um den Schwenkpunkt (30) verschwenkbar ist und eine durch das erste Hebeldrehgelenk (11) und durch den Schwenkpunkt (30) verlaufende Verbindungsgerade (35) im wesentlichen eine Winkelhalbierende des Schwenkwinkels (α) bildet.

6. Verfahren zum konstruktiven Festlegen einer Drehachse (12a) des zweiten Hebeldrehgelenks (12) des Fahrpedalmoduls eines Kraftfahrzeugs nach einem der Ansprüche 1 bis 5, **dadurch gekennzeichnet, daß** in einer ersten Stellung (A) des Pedalhebels (10) eine erste Position (A22) eines Drehpunkts (22a) des zweiten Pedaldrehgelenks (22), in einer zweiten Stellung (B) des Pedalhebels (10) eine zweite Position (B22) des Drehpunkts (22a) des zweiten Pedaldrehgelenks (22) und in einer dritten Stellung (C) des Pedalhebels (10) eine dritte Position (C22) des Drehpunkts (22a) des zweiten Pedaldrehgelenks (22) ermittelt wird und der Mittelpunkt eines durch die drei Positionen (A22, B22, C22) des Drehpunkts (22a) des zweiten Pedaldrehgelenks (22) verlaufenden Kreises (32) als Drehachse (12a) des zweiten Hebeldrehgelenks (12) verwendet wird.

7. Verfahren nach Anspruch 6, **dadurch gekennzeichnet, daß** die erste Stellung (A) des Pedalhebels (10) die unbetätigte Leerlaufstellung (A) des Pedalhebels (10), die zweite Stellung (B) des Pedalhebels (10) die mittlere Auslenkung des Pedalhebels (10) und die dritte Stellung (C) des Pedalhebels (10) die vollständig betätigte Vollaststellung (C) des Pedalhebels (10) sind.

## Claims

1. Motor vehicle having an accelerator pedal module for controlling the driving speed of the motor vehicle, the accelerator pedal module having a holding structure (2), a first lever (6), a second lever (8) and a pedal lever (10), the first lever (6) being mounted rotatably on the holding structure (2) via a first lever hinge (11), the second lever (8) being mounted rotatably on the holding structure (2) via a second lever hinge (12) and the pedal lever (10) being mounted on the first lever (6) via a first pedal hinge (21) and on the second lever (8) via a second pedal hinge (22), and the holding structure (2) being fastened to a vehicle part (24) of the motor vehicle, the motor vehicle having a driver's compartment (28) and a driver's compartment floor (26) downwardly delimiting the driver's compartment (28), and a pivot point (30) being provided outside the pedal lever (10), **characterized in that** at least one conceivable straight orientation line (33) of the pedal lever (10) passes essentially through the pivot point (30) in at least three positions of the pedal lever (10), and the pivot point (30) is provided in the region of the driver's compartment floor (26).

2. Motor vehicle according to Claim 1, **characterized in that** the holding structure (2) is fitted above the driver's compartment floor (26) to the vehicle part (24).

3. Motor vehicle according to either of Claims 1 and 2, **characterized in that** the pedal lever (10) has a foot support surface (20) and the straight orientation line (33) runs essentially parallel to the foot support surface (20).

4. Motor vehicle according to one of Claims 1 to 3, **characterized in that** the straight orientation line (33) runs through the first pedal hinge (21).

5. Motor vehicle according to one of Claims 1 to 4, **characterized in that** the pedal lever (10) can be pivoted about the pivot point (30) over a pivoting angle (α), and a straight connecting line (35) running through the first lever hinge (11) and through the pivot point (30) essentially forms an angle bisector of the pivoting angle (α).

6. Method for structurally defining an axis of rotation (12a) of the second lever hinge (12) of the accelerator pedal module of a motor vehicle according to one of Claims 1 to 5, **characterized in that** a first position (A22) of a pivot point (22a) of the second pedal hinge (22) is determined in a first position (A) of the pedal lever (10), a second position (B22) of the pivot point (22a) of the second pedal hinge (22) is determined in a second position (B) of the pedal lever (10), and a third position (C22) of the pivot point (22a) of the second pedal hinge (22) is determined in a third position (C) of the pedal lever (10), and the central point of a circle (32) running through the three positions (A22, B22, C22) of the pivot point (22a) of the second pedal hinge (22) is used as the axis of rotation (12a) of the second lever hinge (12).

7. Method according to Claim 6, **characterized in that** the first position (A) of the pedal lever (10) is the unactuated idle position (A) of the pedal lever (10), the second position (B) of the pedal lever (10) is the medium deflection of the pedal lever (10) and the third position (C) of the pedal lever (10) is the completely actuated full-load position (C) of the pedal lever (10).

## Revendications

1. Véhicule comportant un module de pédale d'accélérateur pour commander la vitesse de déplacement du véhicule,
le module de pédale d'accélérateur comportant une structure de support (2), un premier levier (6), un second levier (8) et un levier de pédale (10),
le premier levier (6) étant monté pivotant sur la structure de support (2) par l'intermédiaire d'une première articulation de levier pivotant (11), le second levier (8) étant monté pivotant à la structure de support (2) par une seconde articulation de levier pivotant (12) et le levier de pédale (10) est relié par une première articulation de pédale (21) au premier levier (6) et par une seconde articulation de pédale (22) au second levier (8), la structure de support (2) étant fixée à une partie (24) du véhicule,
le véhicule ayant un habitacle (28) et un plancher (26) délimitant le fond de l'habitacle (28) et il est prévu un point de pivotement (30) en dehors du levier de pédale (10),
**caractérisé par**
au moins une droite d'orientation (33), géométrique, du levier de pédale (10) qui passe essentiellement par le point de pivotement (30) dans au moins trois positions du levier de pédale (10), et
le point de pivotement (30) se situe au niveau du plancher (26) de l'habitacle.

2. Véhicule selon la revendication 1,
**caractérisé en ce que**
la structure de support (2) est prévue à la partie (24) du véhicule au-dessus du plancher (26).

3. Véhicule selon l'une des revendications 1 ou 2,
**caractérisé en ce que**
le levier de pédale (10) possède une surface d'appui de pied (20) et la droite d'orientation (33) est essentiellement parallèle à la surface d'appui de pied (20).

4. Véhicule selon l'une des revendications 1 à 3,
**caractérisé en ce que**
la droite d'orientation (33) passe par la première articulation de pédale (21).

5. Véhicule selon l'une des revendications 1 à 4,
**caractérisé en ce que**
le levier de pédale (10) est monté pivotant autour du point de pivotement (30) suivant un angle de pivotement (α) et une droite (35) passant par la première articulation de levier (11) et par le point de pivotement (30) constitue pratiquement une bissectrice de l'angle de pivotement (α).

6. Procédé de fixation par construction d'un axe de rotation (12a) de la seconde articulation de levier (12) du module de pédale d'accélérateur d'un véhicule selon l'une des revendications 1 à 5,
**caractérisé en ce que**
dans une première position (A) du levier de pédale (10) on détermine une première position (A22) d'un point de rotation (22a) de la seconde articulation de pédale (22), dans une seconde position (B) du levier de pédale (10) on détermine une seconde position (B22) du point de rotation (22a) de la seconde articulation (22) et dans une troisième position (C) du levier de pédale (10) on détermine une troisième position (C22) du point de rotation (22a) de la seconde articulation de pédale (22) et
on utilise le centre d'un cercle (32) passant par les trois positions (A22, B22, C22) du point de rotation (22a) de la seconde articulation de pédale (22) comme axe de rotation (12a) de la seconde articulation de levier (12).

7. Procédé selon la revendication 6,
**caractérisé en ce que**
la première position (A) du levier de pédale (10) est la position de ralenti (A) non actionnée du levier de pédale (10), la seconde position (B) du levier de pédale (10) est la position de débattement moyenne du levier (10) et la troisième position (C) du levier de pédale (10) est la position de charge maximale (C) d'enfoncement complet du levier de pédale (10).
